# NEW EUROPEAN PATENT SPECIFICATION

(11) **EP 1 295 630 B2**
(45) Date of publication and mention of the opposition decision: **22.06.2011**
(45) Mention of the grant of the patent: 01.08.2007
(21) Application number: 01943870.4
(22) Date of filing: 28.06.2001
(51) Int. Cl.: B01D 61/04, B01D 61/16, C02F 1/44, B01D 61/22, C25D 13/24

(54) **METHOD AND APPARATUS FOR TREATMENT OF WASTE WATER FROM CATIONIC ELECTRODEPOSITION COATING PROCESS**
VERFAHREN UND VORRICHTUNG ZUR BEHANDLUNG VON ABWASSER KATIONISCHER ELEKTROABSCHEIDUNGSÜBERZUGS-BESCHICHTUNGSVERFAHREN
PROCEDE ET APPAREIL DESTINES AU TRAITEMENT DES EAUX USEES PROVENANT D'UN PROCEDE DE REVETEMENT PAR ELECTRODEPOSITION CATIONIQUE

(30) Priority: 30.06.2000 JP 2000198162
(43) Date of publication of application: 26.03.2003
(73) Proprietor: Asahi Kasei Chemicals Corporation, Tokyo 101-8101 (JP)
(72) Inventor: ITOH, Kouryo, Fuji-shi, Shizuoka 416-0939 (JP)
(74) Representative: Brookes Batchellor LLP
(86) International application number: PCT/JP2001/005577
(87) International publication number: WO 2002/002212

(56) References cited:
- JP-A- 4 256 406
- JP-A- 9 234 349
- JP-A- 10 183 396
- JP-A- 11 342 361
- JP-A- 51 092 840
- JP-A- 2000 263 044
- US-A- 6 077 437

## Description

### TECHNICAL FIELD

The present invention relates to a process for treating waste water from the final water washing step in cationic electrocoating and an apparatus for the treatment. More particularly, the invention relates to a process and an apparatus for treating the waste water from the final water washing step which is capable of controlling the pH of the waste water in the treatment of the waste water by a membrane separation unit.

### BACKGROUND ART

Cationic electrocoating is widely used in coating of not only automobile bodies, but also automobile parts, electric appliances, architectual materials, etc. Generally, in the electrocoating process, a coating film is electrochemically formed on articles to be coated in an electrodeposition tank, followed by washing before conducting drying and baking.

That is, in the electrocoating process, the electrocoating films formed on the articles in the electrodeposition tank are hardened by drying and baking in a drying oven to complete coating, but some unused electrocoating paint, negatively charged counter ions, etc. remain as deposits on the coating films formed in the electrodeposition tank. Direct drying and backing of the coating films without removal of such deposits will give rise to poor finishings such as so-called sagging, stripes and spots. Thus, drying and baking are usually carried out after the washing step following the electrocoating.

The washing step can be classified into a UF (ultrafiltration) filtrate water-washing step and a final water washing step. The UF filtrate water-washing step is a step of washing the surfaces of coated articles with a UF filtrate obtained by filtering the paint in the electrodeposition tank through an UF membrane, thereby washing off the paint components physically deposited on the coated articles. The washed-off paint components are recovered and reused in the electrodeposition tank. The final water washing step involves finish-washing the coating films formed on the coated articles with pure water or industrial water, wherein a very small quantity of paint components or ions remaining after the UF filtrate water-washing step is finally washed off. The water used in the finish washing is discharged as waste water.

The final water washing step as the finish washing requires a very large quantity of water, and in the case of automobile bodies requiring particularly strict control of coated surfaces, the quantity of water amounts to 100 ℓ/min or more. All of the quantity of water used in the final water washing step is then discharged to the outside of the electrocoating process as waste water. The waste water contains the paint components or contaminant ions, though in very small quantities, and thus waste water treatments such as a coagulation treatment, etc. are necessary before the discharging.

As a process for treating such waste water, a membrane separation process has been proposed. For example, WO96/07775 discloses a process which comprises feeding waste water discharged from a final water washing tank for carrying out the final water washing step to a concentration tank, and separating the waste water into a filtrate and a concentrated solution comprising paint components through a semipermeable membrane, while adjusting the pH of the waste water in the concentration tank. It also discloses reuse of the separated concentrated solution as a paint and recyclic use of the filtrate as water for the final water washing step.

### DISCLOSURE OF THE INVENTION

WO96/07775 further discloses a batch-wise method which comprises storing a definite quantity of waste water discharged from the final water washing tank in the concentration tank before conducting the filtration step, and injecting an acid into the concentration tank, thereby adjusting the pH of the waste water. Also disclosed is a method comprising injecting an acid into the filtrate every time the membrane is back washed with the filtrate (injecting an acid into back wash water every time when back washing is carried out) as a way to adjust the pH in the concentration tank.

However, the batch-wise method of adjusting pH by injecting an acid into a definite quantity of waste water in advance fails to provide a satisfactory control of pH increase in the concentration tank during the operation of a filtration unit, resulting in a decrease in the treating capacity of the filtration unit. Furthermore, such a batch-type method requires provision of a large-scale waste water storage tank for receiving the waste water from the final water washing tank in a large-scale coating process such as an automobile coating process or requires continuous receiving and treatment of waste water from the final washing water step during the coating operation even in a small-scale coating process for continuous production such as automobile parts or the like. Thus, inevitable complication of processing steps, etc. have been problems so far.

The method of injecting an acid into the filtrate before the back washing to keep a desired pH, on the other hand, has the limitation of increasing the frequency of acid injection, resulting in a difference between the pH before the acid injection and that right after the acid injection. Furthermore, it is difficult to charge the proper quantity and concentration of the acid in view of the changing state of the filtration step. Thus, it cannot be said that the method is preferable for controlling the pH to a narrow range during the operation of the filtration step.

To keep the quality of electrocoating constant, it is preferable that the quality of water for use in the water washing step be stable, and also that the pH change of the filtrate to be recyclically used as water for the final water washing be naturally minimized.

Still further, the conventional method of directly detecting the pH of waste water discharged from the final water washing tank in the concentration tank suffers from formation of paint film on the pH sensor with an increasing paint component concentration of the waste water in the concentration tank, resulting in failure to detect an exact pH value. Thus, the pH sensor must be frequently cleaned of foulings, and its maintenance control is a time-consuming problem.

As disclosed in WO96/07775, pH of waste water discharged from the final water washing tank must be kept to 6.4 or less to keep the membrane separation unit stable. The lower the pH, the more preferable.

However, pH of the filtrate obtained by filtration of the waste water from the final water washing tank is 0.2 - 0.5 lower than the pH of the waste water itself from the final water washing tank. Thus, in the case of recyclic use of the filtrate as water for the final water washing, control based only on measurement of pH of the waste water from the final water washing tank cannot control the filtrate pH, and the filtrate for the recyclic use has a risk of redissolving the electrocoating films during the filtrate washing of the electrocoating films. Particularly in the case of coated articles requiring a strict quality control of electrocoating films such as automobile bodies, this is a critical problem. Thus, pH of the filtrate, particularly its lower limit value, must be strictly controlled.

JP-A-4 256 406 discloses, see figure and abstract, a plant for purification of sewage water comprising a receiving-concentration tank, a membrance separation unit into which feed received in the tank is supplied, a filtrate recovery line, a concentrated solution recovery line for returning concentrate to the tank, a pH-sensor in the filtrate line and an acid injection unit for injecting an acid into the tank.

An object of the present invention is to provide a process and an apparatus for treating waste water from the final water washing step by a membrane separation unit, free from the aforementioned problems, by efficiently, precisely and continuously controlling pH of the waste water from the final water washing step to the membrane separation unit.

The essential features and various embodiments of the present invention are enumerated below.

The present invention provides a process for treating waste water as defined in Claim 1. The present invention also provides an apparatus for treating waste water.

### BRIEF DESCRIPTION OF THE DRAWINGS

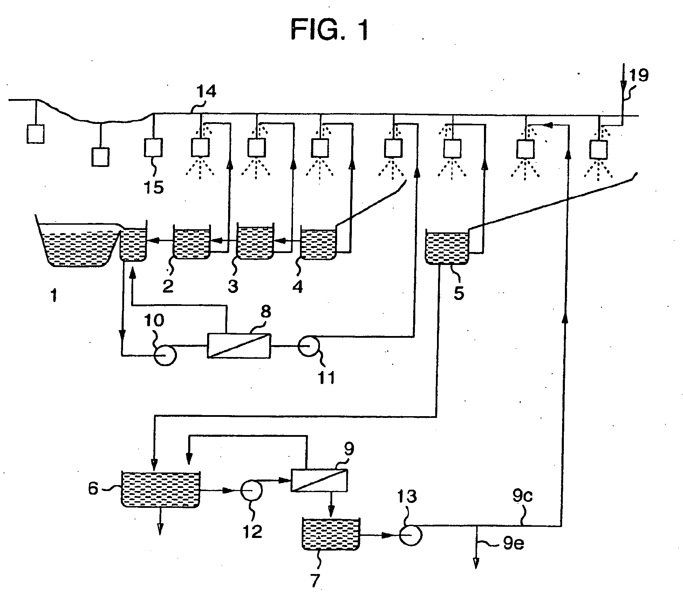

Fig. 1 is a flow diagram showing one embodiment of a cationic electrocoating process provided with a membrane separation unit for treating waste water from a final water washing tank.
Fig. 2 is a schematic flow diagram showing one embodiment of an apparatus for treating waste water to which a pH controlling method of the present invention is applied.

In the drawings, reference numerals have the following meanings:
1: electrocoating tank, 2: first UF filtrate water-washing tank, 3: second UF filtrate water-washing tank, 4: third UF filtrate water-washing tank, 5: final water washing tank, 5a: feed line, 6: receiving-concentration tank, 7: filtrate storage tank, 8: UF for recovered water washing, 9: membrane separation unit, 9a: concentrated solution recovery line, 9b: filtrate withdrawal line, 9c: filtrate recovery line, 9d: concentrated solution recovery line, 9e: filtrate discharge line, 10: recycle pump, 11: recovery pump, 12: recycle pump, 13: filtrate recovery pump, 14: conveyer, 15: article to be coated, 16: pH sensor, 17: acid storage tank, 17a: acid injection line, 18: acid injection pump, 19: pure water feed line, and 20: acid injection unit.

### BEST MODE FOR CARRYING OUT THE INVENTION

The present invention will be described below, referring to embodiments shown in the drawings. In the cationic electrocoating, articles 15 to be coated are fixed to a conveyer 14 at first, and then fed to an electrodeposition tank 1 for electrocoating. Then, the electrocoated articles 15 are successively water washed in a first UF filtrate water-washing tank 2, a second UF filtrate water-washing tank 3 and a third UF filtrate water-washing tank 4 (UF filtrate water-washing step line) and further in a final water-washing tank 5 (final water-washing step line). After the water washing in the final water-washing tank 5, it is preferable to wash the coated articles 15 with pure water from a pure water feed line 19. Waste coater from the final water-washing tank 5 is fed to a receiving-concentration tank 6 and then fed to a membrane separation unit 9 provided with a separation membrane (module) from the receiving-concentration tank 6 by a recycle pump 12. By means of the membrane separation unit 9, the waste water is separated into a concentrated solution and a filtrate. The filtrate is usually stored in a filtrate storage tank 7 and recycled mainly to the final water washing step through a filtrate recovery line 9c by a filtrate recovery pump 13 and reused for washing the coated articles 15. It is preferable to conduct the pure water washing after the final water washing step. To keep a balance of water quantity in the final water washing, it is necessary to throw the same quantity of filtrate away through a filtrate discharge line 9e as the quantity of pure water freshly fed through the pure water feed line 19. As a result of throwing a portion of the filtrate away, accumulation of contaminant ions in the final water washing can be effectively prevented, as compared with the case of using no pure water at all. When the concentrated solution has reached a desired concentration level, it is returned to a tank of a higher concentration than that of the concentrate such as the electrodeposition tank 1, the first UF filtrate water-washing tank 2, etc. for reuse.

The present apparatus for treating waste water comprises a receiving-concentration tank 6, a membrane separation unit 9, a filtrate recovery line 9c, a concentrated solution recovery line 9a, a pH sensor 16 and an acid injection unit 20.

The receiving-concentration tank 6 is to receive waste water fed through the feed line 5a from the final water washing tank 5 in the final water washing step, and also to concentrate the waste water. Structure, etc. of the receiving-concentration tank 6 are not particularly limited. When the membrane separation unit 9 is of a cross-flow type, it is not particularly necessary to provide the receiving-concentration tank 6 with a stirrer, etc. because a spontaneous stirring action develops by reflux (recycling return flow) from the membrane separation unit as soon as the operation starts. In that case, the period from the receiving of waste water in the receiving-concentration tank 6 to the start of operation of the membrane separation unit 9 to give off the filtrate is a time period that is incapable of detecting and adjusting pH. Thus, it is preferable to design the membrane separation unit 9 to start to operate with as small a quantity of the fed waste water as possible and minimize the time period that is incapable of detecting and adjusting pH.

When the waste water from the final water washing step is continuously fed to the receiving-concentration tank 6, it is preferable to provide the receiving-concentration tank 6 with a liquid level-controlling means such as a liquid level controller, etc.

The receiving-concentration tank 6 is provided with a concentrated solution recovery line 9d for returning the concentrated solution, which has reached a desired concentration level in the tank, to a tank of a higher concentration than that of the concentrated solution such as the electrodeposition tank 1, the first UF filtrate water-washing tank 2, etc.

The membrane separation unit 9 is connected to the receiving-concentration tank 6 through a recycle pump 12. The membrane for use in the membrane separation unit 9 is not particularly limited, and includes, for example, an RO (reverse osmosis) membrane, a UF membrane, a MF (microfiltration) membrane, etc., among which the UF membrane is most suitable for use.

The RO membrane is distinguished in the paint component-removing capacity, but has a tendency to remove contaminant ions together with the paint components, resulting in an increase in the contaminant ions in the final water washing system with a consequent influence upon the coating quality. Furthermore, it is poor in the treating capacity per unit time and thus is economically not preferable.

The MF membrane is distinguished in the treating capacity, but allows more paint components to permeate therethrough during the filtration, resulting in a decrease in the quantity of the paint recovered in a concentrated solution with a consequent poor washing effect when the filtrate is reused as the final washing water.

The UF membrane, on the other hand, has no practical problem as to both treating capacity and paint component-removing capacity. The UF membrane preferably has a molecular weight cut off of about 3,000 to about 1,000,000 and can be composed of any of polyacrylonitrile, polysulfone, polyolefin and their chemically modified materials as a constituent material.

Practically, the above-mentioned membranes such as a UF membrane, etc. are made into a module in a hollow filament form, spiral form, tubular form or other form, and the module is provided in the membrane separation unit 9.

The filtrate recovery line 9c is a line for continuously recycling the filtrate separated by the membrane separation unit 9 to the final water washing step, which is usually directed to the coated articles in the final water washing step from the filtrate storage tank 7, in which the filtrate separated by the membrane separation unit 9 is stored, through the filtrate recovery pump 13. In some cases, the filtrate recovery line 9c is connected to the final water washing tank 5. The concentrated solution recovery line 9a is a line for returning the concentrated solution separated by the membrane separation unit 9 to the receiving-concentration tank 6.

The pH sensor 16 continuously detects the pH value of the filtrate separated by the membrane separation unit 9, and can be provided in any position capable of detecting a pH value of the filtrate, but preferably in a filtrate withdrawal line 9b for withdrawing the filtrate separated by the membrane separation unit 9, thereby minimizing the time lag between the pH of the filtrate and the pH of the waste water from the final water washing tank.

The structure, function, etc. of the pH sensor 16 are not particularly limited, and commercially available electrodes of flow type, immersion type, throwing type, etc. can be used. However, the flow type is suitable for the pH detection in the above-mentioned filtrate withdrawal line 9b. Usually, the flow type electrode is provided in a specifically designed box (a closed box with a liquid inlet and a liquid outlet) called an electrode-retaining tank provided in the line. The pH sensor 16 generally comprises a converter for externally outputting pH values and a pH indicator-controller (controller) with a function to display pH values, a function to set pH upper and lower limit values, an alarm function, etc.

The acid injection unit 20 is an apparatus for continuously injecting an acid, which comprises, for example, an acid storage tank 17, an acid injection pump 18 and an acid injection line 17a. Stirring is required for improving the trailing of the filtrate pH and for making the pH of the waste water uniform, and thus the acid injection line 17a is preferably directed to the receiving-concentration tank 6 so that the acid can be injected into the waste water in the receiving-concentration tank 6.

The present process for treating waste water includes treating waste water, which comprises feeding waste water from a final water washing tank 5 of a final water washing step in the cationic electrocoating into a receiving-concentration tank 6, then feeding the waste water stored in the receiving-concentration tank 6 to a membrane separation unit 9, thereby separating the waste water into a filtrate and a concentrated solution, and continuously recovering the separated filtrate for reuse in the final water washing step, characterized by continuously detecting pH values of the filtrate, and continuously injecting an acid into the waste water so that the pH values of the filtrate can be kept in a predetermined range, thereby adjusting the pH of the waste water.

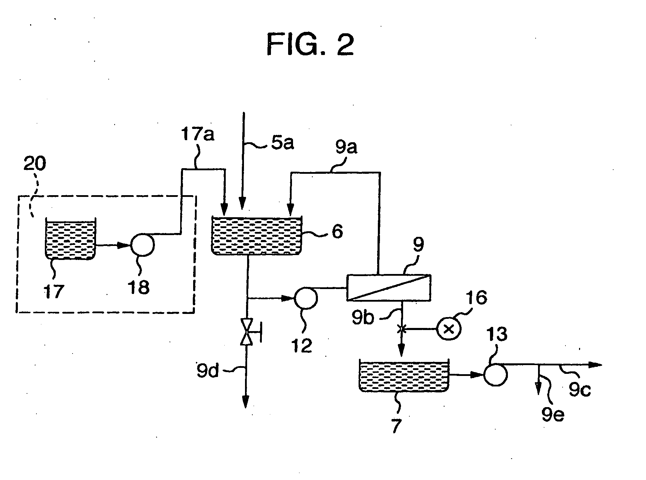

That is, in Fig. 2, the waste water from the final water washing tank 5 is fed to the receiving-contraction tank 6 through the feed line 5a, and then fed to the membrane separation unit 9 by the recycle pump 12 to separate the waste water into a filtrate and a concentrated solution. The separated concentrated solution contains paint components and thus is returned to the receiving-concentration tank 6 through the concentrated solution recovery line 9a. The separated filtrate, on the other hand, is fed to the filtrate storage tank 7, while undergoing continuous pH detection, and continuously recovered through the filtrate recovery line 9 by the filtrate recovery pump 13 for recyclic use as water in the final water washing step. For throwing a portion of the filtrate away, the filtrate is discharged through the filtrate discharge line 9e.

Continuous recovery of the filtrate for reuse in the final water washing step means continuous recycle of the filtrate obtained during the operation of the membrane separation unit and reuse of it in the final water washing step.

Continuous injection of an acid into the waste water does not mean injecting a predetermined quantity of an acid into a definite quantity of the waste water stored in the concentration tank prior to the start of the filtration step without any further acid injection thereafter as disclosed in WO96/07775, but a method for injecting an acid when desired, on the basis of continuously monitored pH values of the filtrate during the operation of the membrane separation unit. Thus, in the present invention, an acid may be injected into the waste water during the operation of the membrane separation unit.

In the present invention, the waste water can be fed intermittently or continuously to the receiving-concentration tank 6 from the final water washing tank 5, but, continuous receiving is preferable for smooth and effective treatment of the waste water.

In such a case, the process for treating waste water is a process for treating waste water, which comprises continuously feeding waste water from the final water washing tank of the final water washing step in the cationic electrocoating to the receiving-concentration tank, then feeding the waste water stored in the receiving-concentration tank to a membrane separation unit, thereby separating the waste water into a filtrate and a concentrated solution, continuously recovering the separated filtrate for reuse in the final water washing step, characterized by continuously detecting pH values of the filtrate, and continuously injecting an acid into the waste water so that the pH values of the filtrate can be kept in a predetermined range, thereby adjusting the pH of the waste water.

Continuous feed of waste water from the final water washing tank of the final water washing step to the receiving-concentration tank means receiving of the waste water so that the liquid level in the receiving-concentration tank 6 can be always kept constant, whereas intermittent feed of the waste water from the final water washing tank of the final water washing step to the receiving-concentration tank means batch-wise receiving of the waste water comprising storing a definite quantity of the waste water in the receiving-concentration tank at first, followed by membrane separation, and then storing a definite quantity of the waste water in the receiving-concentration tank again. In other words, in the case of intermittent feed of the waste water, the liquid level in the receiving-concentration tank 6 cannot always be kept constant.

When operation of the cationic electrocoating process itself is discontinued, receiving of the waste water into the receiving-concentration tank 6 can be temporally discontinued for the purpose of concentrating the waste water in the receiving-concentration tank 6, where membrane separation of the waste water can be carried out.

In the present invention, it is necessary to continuously detect the pH values of the filtrate separated by the membrane separation unit 9 by the pH sensor 16. To minimize the time lag between the pH of the filtrate and the pH of the waste water from the final water washing tank, it is preferable to detect pH values of the filtrate right after the withdrawal of the filtrate from the membrane separation unit 9. The acid injection pump 18 is put into operation on the basis of the detected pH values to inject an acid from the acid storage tank 17 into the waste water through the acid injection line 17a by the acid injection pump 18, thereby controlling the pH of the filtrate to a predetermined range. That is, when the pH of the filtrate becomes higher than a set upper limit value, the acid injection pump 18 is activated to lower the pH of the filtrate by acid injection, and when the pH of the filtrate reaches a set lower limit value, the operation of the acid injection pump is stopped. By repetition of such pump operations, pH values of the filtrate can be kept in a predetermined range during the operation of the membrane separation unit 9.

Injection of an acid into the waste water can be made to either the receiving-concentration tank 6 or feed line 5a, but to provide the filtrate with a suitable, a longer retention time of the filtrate is preferable and thus it is preferred to inject an acid into the waste water in the receiving-concentration tank 6. As mentioned above, injection of an acid into the waste water is conducted continuously in this case. To minimize a change in pH between the filtrate and the waste water from the final water washing tank, it is preferable to determine the concentration of an acid to be injected into the waste water from the final water washing tank by a test in advance.

In the present invention, to keep the treating capacity of the membrane separation unit 9 stable, the pH of the waste water to be fed to the membrane separation unit 9 is always set to preferably 6.4 or less, more preferably 6.0 or less and most preferably 4.5 - 6.0 for the sake of the membrane.

In view of the fact that the pH value of the filtrate is at most 0.5 lower than that of the waste water, the upper limit pH value of the filtrate is preferably 5.9, and more preferably 5.5.

The lower limit pH value of the filtrate, on the other hand, must be preferably set to a value that is incapable of redissolving electrocoating films in the final water washing step, and generally a pH of about 5.0 is a lower limit value incapable of causing redissolution. Particularly, it can be determined by an advance test using test panels. That is, the lower limit pH value of the filtrate is preferably a value about 0.2 higher than the general lower limit pH value of 5.0, i.e. 5.2.

In the case that the pH is not controlled at all during the operation of the membrane separation unit, the pH of the filtrate will increase with the progress of treatment by the membrane separation unit 9, because the pH of the waste water is usually 6.5 or higher.

In the present invention, the lower limit pH value of the filtrate is set to a value that is incapable of causing redissolving of the electrocoating films, and thus recyclic reuse of the filtrate in the final water washing step can ensure prevention of the coating films from redissolution.

Furthermore, in the present invention, the pH of the filtrate is continuously detected and an acid is continuously injected into the waste water so that the pH value of the filtrate can be kept in a predetermined range. Thus, the pH of the waste water itself can be kept stable in an appropriate range and the treating capacity of the membrane separation unit can also be kept stable.

Still further, in the present invention, the pH of the waste water in the receiving-concentration tank is not directly detected, but the pH of clear filtrate is detected, and thus the pH sensor is free of fouling even if it is used for a long time and it can therefore detect exact pH values under easy control.

### Example

An example of certain aspects of the present invention will be given below.

In the final water washing step of electrocoating of electric household appliances, the following tests were conducted, using a membrane separation unit shown in Fig. 2.

400 ℓ of waste water from a final water washing tank 5 was fed to a 500-ℓ receiving-concentration tank 6, and then treated by a membrane separation unit 9 (Microza, XCV-3010, made by Asahi Kasei Corp.), while keeping the liquid level of the waste water constant by a liquid level controller, where the lower limit pH value and the upper limit pH value of the filtrate were set to 5.3 and 5.5, respectively, in view of the fact that the pH of the filtrate causing redissolution of the electrocoating films was 5.1, and 10 wt% acetic acid was kept ready in an acid storage tank 17. Operation was continued for 8 hours at a filtrate flow rate of 8 ℓ/min. The separated filtrate was recovered and recycled to the final water washing step. In this connection, the pH of the filtrate at the start of operation was 6.4, but a pH of 5.3 was established about one minute thereafter by injection of acetic acid into the receiving-concentration tank 6 from the acid storage tank 17, and thereafter the pH was kept in a range of pH of 5.3 - 5.5 without any change in the filtrate flow rate.

Then, receiving of the waste water from the final water washing tank 5 was discontinued, but filtration was continued until the liquid volume in the receiving-concentration tank 6 reached 50 ℓ. The separated concentrated solution was returned to an electrodeposition tank 1. After the concentration, the filtrate flow rate was decreased to 6 ℓ/min. Analytical results of sampled liquids are as follows:
NV(dry-basis solid concentration) of initial waste water = 0.1%, pH = 6.4;
NV of concentrated solution after the final concentration = 3.1%, pH = 5.7; and
NV of filtrate after the final concentration = 0.07%, pH = 5.4,
where "NV (dry-basis solid concentration)" means the concentration of paint components in the waste water.

Such operation of the membrane separation unit as above was repeated for 7 days, but the pH of the filtrate was kept in a range of 5.3 - 5.5, which was not different from the sample measurements made by another instrument. Furthermore, there was no change in the filtrate flow rate between the first day and the seventh day, and even recyclic use of such a filtrate in the final water washing step had no problems of coating film redissolution, etc. at all.

### INDUSTRIAL UTILITY

The present invention is generally applicable to processes which use a cationic electrocoating step. The invention is especially useful in the automotive field where strict coating quality control is required. Therefore, the invention is particularly useful in the automobile body coating step.

## Claims

1. A process for treating waste water in a final water washing step, which process comprises the steps of:
i) a final water washing step;
ii) a pure water washing step;
iii) feeding waste water from a final water washing tank of the final water washing step and pure water washing step in a cationic electrocoating to a receiving-concentration tank;
iv) feeding the waste water from the receiving-concentration tank to a membrane separation unit, thereby separating the waste water into a filtrate and a concentrated solution; and
v) continuously recovering the separated filtrate for reuse in the final water washing step;
**characterized in that** the process further comprises the steps of:
vi) continuously detecting the pH of the filtrate;
vii) continuously injecting an acid into the waste water, thereby keeping the pH of the filtrate to a predetermined range and adjusting the pH of the waste water; and
viii) throwing a portion of the recovered filtrate away, to prevent accumulation of contaminant ions in the final water washing.

2. A process for treating waste water according to Claim 1, wherein the waste water from the final water washing tank is continuously fed to the receiving-concentration tank.

3. A process for treating waste water according to Claim 1 or 2, wherein the pH of the filtrate is kept in a range of 5.2 - 5.9.

4. A process for treating waste water according to Claim 1 or 2, wherein the pH of the filtrate is detected immediately after withdrawal of the filtrate from the membrane separation unit.

5. A process for treating waste water according to Claim 1 or 2, wherein the acid is injected into the waste water in the receiving-concentration tank.

6. An apparatus for treating waste water from a final water washing step in a cationic electrocoating to prevent accumulation of contaminant ions in the final water, which apparatus comprises: a receiving-concentration tank for receiving waste water from a final water washing step and from a pure water washing step in a cationic electrocoating, process; a membrane separation unit to which the waste water received in the receiving-concentration tank is supplied; a filtrate recovery line for recycling a filtrate separated in the membrane separation unit to a final water washing tank; a final water washing unit in which the separated and recycled filtrate is reused as a final washing water; a concentrated solution recovery line for returning a concentrated solution separated in the membrane separation unit to the receiving-concentration tank; a pH sensor for continuously detecting the pH value of the filtrate separated in the membrane separation unit; an acid injection unit for injecting an acid into the waste water; and a filtrate discharge line to throw a portion of the filtrate away from the filtrate recovery line.

7. An apparatus for treating waste water according to Claim 6, wherein the pH sensor is provided in a filtrate withdrawal line for withdrawing the filtrate separated in the membrane separation unit.

## Patentansprüche

1. Verfahren zur Behandlung von Abwasser in einem letzten Wasserwaschschritt, wobei das Verfahren die folgenden Schritte umfasst:
i) einen letzten Wasserwaschschritt;
ii) einen Reinwasserwaschschritt;
iii) Zuführen von Abwasser aus einem letzten Wasserwaschtank des letzten Wasserwaschschritts und des Reinwasserwaschschritts in einer kationischen Elektrobeschichtung in einen Aufnahme-Konzentrations-Tank;
iv) Zuführen des Abwassers aus dem Aufnahme-Konzentrations-Tank in eine Membrantrenneinheit, wodurch das Abwasser in ein Filtrat und eine konzentrierte Lösung aufgetrennt wird; und
v) kontinuierliches Zurückgewinnen des abgetrennten Filtrats zur Wiederverwendung im letzten Wasserwaschschritt;
**dadurch gekennzeichnet, dass** das Verfahren weiterhin die folgenden Schritte umfasst:
vi) kontinuierliches Messen des pH-Werts des Filtrats;
vii) kontinuierliches Injizieren einer Säure in das Abwasser, wodurch der pH-Wert des Filtrats in einem vorbestimmten Bereich gehalten wird, und Einstellen des pH-Werts des Abwassers; und
viii) Verwerfen eines Teils des zurückgewonnenen Filtrats, um eine Akkumulation von kontaminierenden Ionen im letzten Wasserwaschschritt zu verhindern.

2. Verfahren zur Behandlung von Abwasser gemäß Anspruch 1, wobei das Abwasser aus dem letzten Wasserwaschtank dem Aufnahme-Konzentrations-Tank kontinuierlich zugeführt wird.

3. Verfahren zur Behandlung von Abwasser gemäß Anspruch 1 oder 2, wobei der pH-Wert des Filtrats in einem Bereich von 5,2 bis 5,9 gehalten wird.

4. Verfahren zur Behandlung von Abwasser gemäß Anspruch 1 oder 2, wobei der pH-Wert des Filtrats unmittelbar nach der Entnahme des Filtrats aus der Membrantrenneinheit gemessen wird.

5. Verfahren zur Behandlung von Abwasser gemäß Anspruch 1 oder 2, wobei die Säure im Aufnahme-Konzentrations-Tank in das Abwasser injiziert wird.

6. Vorrichtung zur Behandlung von Abwasser aus einem letzten Wasserwaschschritt in einer kationischen Elektrobeschichtung, um eine Akkumulation von kontaminierenden Ionen im letzten Wasser zu verhindern, wobei die Vorrichtung Folgendes umfasst: einen Aufnahme-Konzentrations-Tank zum Aufnehmen von Abwasser aus einem letzten Wasserwaschschritt und aus einem Reinwasserwaschschritt in einem kationischen Elektrobeschichtungsverfahren; eine Membrantrenneinheit, der das im Aufnahme-Konzentrations-Tank aufgenommene Abwasser zugeführt wird; eine Filtratrückgewinnungsleitung zum Zurückführen eines in der Membrantrenneinheit abgetrennten Filtrats in einen letzten Wasserwaschtank; eine letzte Wasserwascheinheit, in der das abgetrennte und zurückgeführte Filtrat als letztes Waschwasser wiederverwendet wird; eine Rückgewinnungsleitung für konzentrierte Lösung zum Zurückführen einer in der Membrantrenneinheit abgetrennten konzentrierten Lösung zum Aufnahme-Konzentrations-Tank; einen pH-Sensor zum kontinuierlichen Messen des pH-Werts des in der Membrantrenneinheit abgetrennten Filtrats; eine Säureinjektionseinheit zum Injizieren einer Säure in das Abwasser; und eine Filtratabflussleitung zum Verwerfen eines Teils des Filtrats aus der Filtratrückgewinnungsleitung.

7. Vorrichtung zur Behandlung von Abwasser gemäß Anspruch 6, wobei der pH-Sensor in einer Filtratentnahmeleitung zum Entnehmen des in der Membrantrenneinheit abgetrennten Filtrats bereitgestellt wird.

## Revendications

1. Procédé de traitement d'eaux usées dans un stade final de lavage à l'eau, procédé qui comprend :
i) un stade final de lavage à l'eau ;
ii) un stade de lavage à l'eau pure ;
iii) le fait d'envoyer des eaux usées provenant d'une cuve finale de lavage à l'eau du stade final de lavage à l'eau et du stade de lavage à l'eau pure dans un électrodépôt cationique dans une cuve de réception-concentration ;
iv) le fait de charger les eaux usées de la cuve de réception-concentration dans une unité de séparation à membrane, pour ainsi séparer les eaux usées en un filtrat et en une solution concentrée ; et
v) le fait de recueillir en continue le filtrat séparé pour le réutiliser dans le stade final de lavage à l'eau ;
**caractérisé en ce que** le procédé comporte en outre :
vi) le fait de détecter en continue le pH du filtrat ;
vii) le fait d'injecter en continue un acide dans les eaux usées, pour ainsi maintenir le pH du filtrat dans une plage déterminée à l'avance et ajuster le pH des eaux usées ; et
viii) le fait de rejeter une partie du filtrat récupéré, pour ainsi empêcher l'accumulation d'ions contaminants dans le lavage final à l'eau.

2. Procédé de traitement des eaux usées suivant la revendication 1, dans lequel on charge en continu les eaux usées provenant de la cuve finale de traitement à l'eau dans la cuve de réception-concentration.

3. Procédé de traitement des eaux usées suivant la revendication 1 ou 2, dans lequel on maintient le pH du filtrat entre 5, 2 et 5,9.

4. Procédé de traitement des eaux usées suivant la revendication 1 ou 2, dans lequel on détecte le pH du filtrat immédiatement après avoir retiré le filtrat de l'unité de séparation à membrane.

5. Procédé de traitement des eaux usées suivant la revendication 1 ou 2, dans lequel on injecte l'acide dans les eaux usées dans la cuve de réception-concentration.

6. Installation de traitement des eaux usées provenant d'un stade final de lavage à l'eau d'un électrodépôt cationique pour empêcher l'accumulation d'ions contaminants dans l'eau finale, qui comprend une cuve de réception-concentration pour recevoir des eaux usées d'un stade final de lavage à l'eau et d'un stade de lavage à l'eau pure d'un électrodépôt cationique, une unité de séparation à membrane à laquelle les eaux usées reçues dans la cuve de réception-concentration sont envoyées, une ligne de récupération du filtrat pour recycler un filtrat séparé dans l'unité de séparation à membrane à une cuve finale de lavage à l'eau, une unité finale de lavage à l'eau dans laquelle le filtrat séparé et recyclé est réutilisé en tant qu'eau de lavage finale, une ligne de récupération de solution concentrée pour retourner une solution concentrée séparée dans l'unité de séparation à membrane à la cuve de réception-concentration, un capteur de pH pour détecter en continue pH du filtrat séparé dans l'unité de séparation à membrane ; une unité d'injection d'acide pour injecter un acide dans les eaux usées ; et une ligne de décharge de filtrat pour rejeter une partie du filtrat de la ligne de récupération de filtrat.

7. Installation de traitement des eaux usées suivant la revendication 6, dans laquelle le capteur de pH est prévu dans une ligne de soutirage du filtrat pour soutirer le filtrat séparé dans l'unité de séparation à membrane.
